# EUROPEAN PATENT SPECIFICATION

(11) **EP 4 408 694 B1**
(45) Date of publication and mention of the grant of the patent: **19.11.2025**
(21) Application number: 21798569.6
(22) Date of filing: 30.09.2021
(51) Int. Cl.: B60L 1/00, B60L 3/00, B60L 15/20, B60L 50/50, B60L 50/71, B60L 58/30, B60H 1/00, H01M 8/04, H01M 8/04089, H01M 8/04111

(54) **A SYSTEM, A METHOD OF CONTROLLING A SYSTEM, AND A VEHICLE COMPRISING A SYSTEM**
SYSTEM, VERFAHREN ZUR STEUERUNG EINES SYSTEMS UND FAHRZEUG MIT EINEM SYSTEM
SYSTÈME, PROCÉDÉ DE COMMANDE D'UN SYSTÈME ET VÉHICULE COMPRENANT UN SYSTÈME

(43) Date of publication of application: 07.08.2024
(73) Proprietor: VOLVO TRUCK CORPORATION, 405 08 Göteborg (SE)
(72) Inventor: AUDHAV, Tove, 438 34 LANDVETTER (SE); GAILLAUD, Pierig, 69003 LYON (FR); RAHM, Fredrik, 242 96 HÖRBY (SE)
(74) Representative: Kransell & Wennborg KB
(86) International application number: PCT/EP2021/077005
(87) International publication number: WO 2023/051922

(56) References cited:
- KR-A- 20110 077 472
- US-A1- 2009 126 902
- US-A1- 2016 359 180
- US-A1- 2017 077 534
- US-A1- 2019 181 463

## Description

### TECHNICAL FIELD

The present disclosure relates to a system for a vehicle, the system having a fuel cell system and a compressed air system. The fuel cell system may at least partially be propelled by an electric traction motor. The present disclosure also relates to a method of controlling a system, and a vehicle comprising such a system. Although the disclosure will mainly be directed to a vehicle in the form of a truck using a fuel cell for generating electric power to an electric traction motor, the disclosure may also be applicable for other types of vehicles using a fuel cell system for generating electric power, such as e.g. a hybrid vehicle comprising an electric machine as well as an internal combustion engine for propulsion.

### BACKGROUND

The propulsion systems of vehicles are continuously developed to meet the demands from the market. A particular technical area of vehicle propulsions systems relates to the emission of environmentally harmful exhaust gases. Therefore, other more environmentally friendly alternatives compared to conventional internal combustion engines are evaluated and implemented in vehicles. One example of such alternatives is the use of one or more electric machines for propelling the vehicle.

In order to generate the electric power for operating the electric machine(s), fuel cell system may be one of the more interesting alternatives. According to an example, the fuel cell system may comprise a vast number of fuel cells forming a fuel cell stack in which an electrochemical reaction of hydrogen and oxygen generates electric power. The fuel cell stack may typically have an anode side in which hydrogen is supplied, and a cathode side in which air is supplied.

The compressed air entering the cathode side may generally be supplied with a high air flow of filtered air. Further, for reasons of balancing the fuel cells in the fuel cell system, the fuel cell system may often be operated at excessive air ratio. While this operation of the fuel cell system means that the air flow is relatively high, the air supplied to the fuel cells may generally also be extremely clean necessitating a well-functioning air filtration at the air inlet.

According to their Abstracts, US 2019/181463 A1, US 2016/359180 A1, US 2017/077534 A1, and KR 2011 0077472 A disclose examples of various fuel cell systems.

The fuel cell system is further not the only system in the vehicle that operates by means of compressed air. Other examples of vehicle systems requiring compressed air during ordinary use of the vehicle are various pneumatic systems, also denoted as compressed air consumers, e.g. air brakes, suspensions, gearbox or any other pneumatic vehicle devices arranged in the vehicle and/or in semi-trailers and trailers connected to the truck.

In view of the above, there is not only a desire to be able to deliver air to the fuel cell system that is less energy-consuming, but also a desire to provide a more beneficial use of the compressed air so as to further improve vehicle system efficiency and vehicle performance.

### SUMMARY

It is thus an object of the present disclosure to at least partially overcome the above-described deficiencies. This object is achieved by a system according to claim 1. The objective is also achieved by the other independent claims. The dependent claims are directed to advantageous embodiments of the disclosure.

According to a first aspect, there is provided a system for a vehicle. The system comprises a fuel cell system and a compressed air system for supplying compressed air to a pneumatic device. The fuel cell system comprises at least one fuel cell having an anode side and a cathode side, an outlet conduit connected to an outlet end of the cathode side, an air inlet conduit connected to an inlet end of the cathode side for supply of air to the cathode side of the at least one fuel cell, an air compressor disposed in the air inlet conduit, an air filter arranged to receive air from an ambient environment, the air filter being arranged at an inlet of the air inlet conduit. The compressed air system comprises an electrically operable air compressor connectable to the pneumatic device so as to be arranged in fluid communication with the electrically operable air compressor. In addition, an air inlet of the electrically operable air compressor is connected to the outlet conduit at a selected position, whereby the electrically operable air compressor is configured to receive exhaust air from the cathode side of the at least one fuel cell.

The present disclosure is based on the insight that the fuel cell(s) of a fuel cell system may often be operated at excessive air ratio to provide a certain balance in the fuel cell(s) and that such excessive air ratio may be useful for other vehicle pneumatic systems (comprising separate air compressors) so as to improve the general system efficiency and vehicle performance since the power to drive the vehicle air compressor can be reduced. By way of example, the air booster in the at least one fuel cell may generally have a high air flow of filtered air (and some water) being transferred to and from the fuel cell cathode side. At least for these reasons, the air flow is high but also clean, which necessitates a decent air filtration at the air inlet of the cathode side. In addition, the vehicle pneumatic systems, such as the air brake system of the vehicle may be operable by means of its own air compressor system. Such air compressor system may further be electrically driven, at least in electric vehicles. For the vehicle brake system air compressor, there is also an air filter to protect from particles etc.

The proposed system provides for using filtered air from the filter of the fuel cell system at the fuel cell cathode side to boost the electrically driven vehicle air compressor of another compressed air system of the vehicle, such as the compressed air system for operating the brake system. In particular, the additional filter at the vehicle brake compressor inlet can be omitted. Hence, it becomes possible to provide a simple, yet effective system comprising the fuel cell system and the compressed air system.

In addition, the proposed system may have a positive impact on the size and weight of the fuel cell system and the compressed air system compared to prior art systems because the power to drive the compressor of the compressed air system can be reduced. By way of example, the brake system power consumption may be reduced and the packaging space of the air brake system may be improved. In addition, the compressed air system may be provided without its own air filter as the system makes use of an air filter at the inlet conduit of the fuel cell system. Hence, the proposed system may also provide for using downsized components so as to allow for reducing the costs of the components making up the system, e.g. the brake system power consumption may be reduced. The proposed system may also have a positive impact on the service time of the system since there are fewer parts to exchange (e.g. fewer filters).

The air compressor of the fuel cell system may advantageously be operated to increase the pressure level of the intake air to levels suitable for the fuel cell. A secondary effect may be that the air compressor may also be operated to increase the temperature level of the intake air.

Typically, although not strictly required, the fuel cell system may comprise an expander. In addition, the outlet conduit may be connected between the outlet end of the cathode side and an inlet side of the expander for supply of an exhaust flow from the cathode side to the expander. Further, the fuel cell system may comprise an exhaust conduit connected to an exhaust side of the expander. In this arrangement, the air inlet of the electrically operable air compressor may be connected to the outlet conduit at any one of a position upstream the inlet side of the expander and at a position downstream the exhaust side of the expander.

One advantage with connecting the electrically operable air compressor to the position upstream the inlet side of the expander, is that the compressed air system receives air from the fuel cell system with a relatively high pressure level. In addition, by supplying air from the outlet conduit at a position downstream the fuel cell but upstream the expander, the proposed system allows for using excessive pressurized air coming out of the fuel cell stack in the electrically operable air compressor of the compressed air system. It may be noted that the disclosure here generally refers to the air which is not used in the fuel cell stack (and which is not water in the exhaust).

Typically, the air may be supplied from a position in the outlet conduit that is downstream any humidifier and/or water separator since the brake air system may also be using a water separator.

One advantage with connecting the electrically operable air compressor to the position downstream the outlet side of the expander is that no or only a low reduction in the turbine flow of the expander may occur. Generally, it is believed that more flow in the turbine may be better from an energy efficiency perspective.

The expander should be understood as being a component arranged to expand the exhaust flow from the outlet end of the cathode side of the at least one fuel cell. The expander may, according to an example embodiment, be a turbine. As an alternative, the expander may be a piston expander. Other further alternatives are also conceivable, such as e.g. a roots expander or a scroll expander.

In one example embodiment, a part of the outlet conduit extending between the outlet end of the at least one fuel cell and the inlet side of the expander may comprise a first outlet conduit portion, a second outlet conduit portion and a water management component. Further, the first outlet conduit portion connects the outlet end of the at least one fuel cell to an inlet side of water management component, and the second outlet conduit connects an outlet side of the water management component to the inlet side of the expander. By way of example, the water management component may be a water separator.

In one example embodiment, when the electrically operable air compressor is connected to the position upstream the inlet side of the expander, the electrically operable air compressor may be connected to the second outlet conduit.

In one example embodiment, the fuel cell system may further comprise a charge air cooler arranged in the inlet conduit. Preferably, and according to an example embodiment, the fuel cell system may further comprise a charge air cooler, the charge air cooler being arranged in the inlet conduit in fluid communication between the compressor and the inlet end of the cathode side. In one example embodiment, a part of the inlet conduit extending between the air compressor and the inlet end of the cathode side may comprise a first inlet conduit portion, a second inlet conduit portion and the charge air cooler. The first inlet conduit portion connects the air compressor to the charge air cooler, and the second inlet conduit connects the charge air cooler to the inlet end of the cathode side.

The fuel cell system may further comprise a humidifier connected to the inlet conduit and the outlet conduit. The humidifier may be configured to change the humidity of the inlet air and transfer water from the outlet conduit to the inlet conduit.

In one example embodiment, when the fuel cell system comprises the charge air cooler and the humidifier, the humidifier is connected to the second inlet conduit portion and to the first outlet conduit portion.

In one example embodiment, when the fuel cell system comprises the expander, the air compressor may be connected to the expander and a fuel cell motor. The fuel cell motor should be construed as a motor included in the fuel cell system. The motor is generally configured to drive the air that is transferred through the at least one fuel cell. The wording should thus not be interpreted as the motor being a fuel cell. Further, the exhaust flow from the cathode side may contain air, water, hydrogen, or any combination thereof.

By way of example, the air compressor is mechanically connected to the expander and the fuel cell motor by means of a compressor shaft. As an alternative, the fuel cell motor could be connected to the compressor by means of a first shaft, while the fuel cell motor is connected to the expander by means of a second shaft, where the first and second shafts are different shafts. The compressor and expander may also be provided with separate motors. Such arrangement enables an improved boost and backpressure, as well as more flexibility for further optimization of the system.

The fuel cell system may comprise an outlet conduit valve arrangement arranged in the outlet conduit. By way of example, the fuel cell system comprises an outlet conduit valve arrangement arranged in the first outlet conduit portion. The outlet conduit valve arrangement may be configured to prevent air to flow to the at least one fuel cell via the outlet conduit when the at least one fuel cell is in any one of an inactive state or non-operative state.

The fuel cell system may further comprise an inlet conduit valve arrangement arranged in the inlet conduit. By way of example, the inlet conduit valve arrangement is arranged in the second inlet conduit portion. The inlet conduit valve arrangement may be configured to prevent air to flow to the fuel cell via the inlet conduit when the fuel cell is in any one of an inactive state or non-operative state.

The fuel cell system may further comprise a fuel cell by-pass conduit extending between the inlet conduit and the outlet conduit and a by-pass conduit valve arrangement disposed in said fuel cell by-pass conduit, said by-pass conduit valve arrangement being configured to open and close the fuel cell by-pass conduit in response to an activation state of the electrically operable air compressor. By way of example, the fuel cell by-pass conduit is connected to a position of the first inlet conduit portion and to position of the second outlet conduit portion. The fuel cell by-pass conduit may be connected to a position in the inlet conduit that is upstream the fuel cell and to a position in the outlet conduit that is downstream the fuel cell. Optionally, the by-pass conduit valve arrangement may be configured to open and close the fuel cell by-pass conduit in response to a control signal from the control unit.

The compressed air system may comprise an inlet valve arrangement disposed in-between the outlet conduit and the air inlet of the electrically operable air compressor.

Any one of the above valve arrangements may be controlled by a control unit as described below, for directing the air flow from the fuel cell system to the compressed air system.

The system may thus further comprise a control unit in communication with the fuel cell system and the compressed air system. The control unit may comprise a control circuitry configured to control the flow of air from the fuel cell system to the electrically operable air compressor in response to any one of an operating mode of the vehicle and a power demand from the vehicle. In particular, the control circuitry may be operable to control the flow of air from the fuel cell system to the electrically operable air compressor in response to a change in any one of the operating mode of the vehicle and the power demand from the vehicle. The change in operating mode of the vehicle may e.g. be a change from an inactive mode of the fuel cell system to an active mode of the fuel cell system. Analogously, the change in power demand of the vehicle may e.g. be an increase or decrease in the power demand from the vehicle. In addition, or alternatively, the electrically operable air compressor may be controlled in response to an activation state of the at least one fuel cell.

The control unit may also be connected to any one of the valve arrangements. In addition, or alternatively, the control unit may comprise control circuitry configured to determine a current operating mode for the vehicle and control the valve arrangements based on the current operating mode. The control unit may be operable to control any one of the above-mentioned valve arrangements in response to a received control signal indicating the activation state of the at least one fuel cell. Each one of the valve arrangements may be controllable in a coordinated manner by the control unit in response to the operating mode of the vehicle.

By way of example, in an operating situation when the control unit receives a control signal indicating that the at least one fuel cell is to be set in its in-active state, the control unit may control the inlet conduit and outlet conduit valve arrangements to set in a closed state, while controlling the by-pass conduit valve arrangement and the inlet valve arrangement of the compressed air system to be set in an open state, respectively. In this manner, no flow of air is directed to the at least one fuel cell. Rather, the flow of air is allowed to flow in the by-pass conduit and through an interconnecting-conduit to the electrically operable air compressor. Hereby, the air compressor is capable of operating in an active state so as to provide a sufficient pressure and flow for the electrically operable air compressor.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. By way of example, the control unit is the electronic control unit of the vehicle.

The current operating mode may, for example, relate to a steady state operation of the vehicle. The power demand may, for example, relate to an increased power requirement for the at least one fuel cell. Other examples of operating modes and power demands may be an inactive (shut-down fuel cell system), a vehicle start-up with a fuel cell having a temperature level below a predetermined threshold limit, i.e. a cold start operating mode etc.

According to a second aspect, there is provided a method for controlling a system of a vehicle, said system having a fuel cell system and a compressed air system for supplying compressed air to a pneumatic device, said fuel cell system comprising at least one fuel cell, an outlet conduit connected to an outlet end of a cathode side, an air inlet conduit connected to an inlet end of the cathode side for supply of air to the cathode side of the at least one fuel cell, an air compressor disposed in the air inlet conduit, an air filter arranged to receive air from an ambient environment, said air filter being arranged at an inlet of the air inlet conduit; said compressed air system comprising an electrically operable air compressor connectable to the pneumatic device so as to be arranged in fluid communication with the electrically operable air compressor; wherein an air inlet of the electrically operable air compressor is connected to the outlet conduit at a selected position, whereby the electrically operable air compressor is configured to receive exhaust air from the cathode side of the at least one fuel cell. The method comprises determining any one of a current operating mode and a power demand of the vehicle, and controlling the flow of air from the fuel cell system to the compressed air system based on the any one of the determined current operating mode and the power demand.

Effects and features of the second aspect are largely analogous to those described above in relation to the first aspect.

The method may further comprise controlling the flow of air from the fuel cell system to the compressed air system based on any one of an activation state and flow demand of the electrically operable air compressor. The method may further comprise controlling the flow of air in a by-pass channel extending between inlet conduit and the outlet conduit and the flow of air to and from the at least one fuel cell based on the activation state of the electrically operable air compressor.

The method may further comprise controlling any one of the above-mentioned valve arrangements in response to a control signal from the control unit indicating the activation state of the at least one fuel cell. Each one of the valve arrangements may be controllable in a coordinated manner by the control unit in response to the operating mode of the vehicle.

According to a third aspect, there is provided a vehicle at least partially propelled by an electric traction motor, the electric traction motor being electrically connected to a fuel cell system according to any one of the embodiments described above in relation to the first aspect.

Effects and features of the third aspect are largely analogous to those described above in relation to the first aspect.

The compressed air system may generally refer to a separate part of the system that is connectable to the fuel cell system by means of an inter-connecting conduit. The electrically operable air compressor is arranged to provide compressed air to the pneumatic device of the vehicle. By way of example, the electrically operable air compressor may be arranged to compress received air and transmit the compressed air to an air brake system.

The compressed air system may include additional components. Optionally, the compressed air system may include an air production modulator, APM. The APM is configured to dry/clean the compressed air and distribute it to the compressed air consumers such as the air brakes, suspensions, gearbox or any other pneumatic devices. Further, a control unit may be in communication with and configured to control the electrically operable air compressor on the basis of a selected drive mode of the vehicle.

The pneumatic device may be a vehicle pneumatic device such as an air braking system of the vehicle, a suspension system of the vehicle, an on-board crane system, a hauling system or any other type of auxiliary system of the vehicle operable by means of compressed air. The pneumatic device may also be an external system connectable to the vehicle.

Further features of, and advantages will become apparent when studying the appended claims and the following description. The skilled person will realize that different features may be combined to create embodiments other than those described in the following, without departing from the scope of the appended claims.

The terminology used herein is for the purpose of describing particular examples only and is not intended to be limiting of the disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a vehicle in the form of a truck;
Fig. 2 is a schematic illustration of an example embodiment of a system comprising a fuel cell system in fluid communication with a compressed air system and a vehicle pneumatic device;
Fig. 3 is a schematic illustration of another example embodiment of a system comprising a fuel cell system in fluid communication with a compressed air system and a vehicle pneumatic device; and
Fig. 4 is a flow chart of a method of controlling the fuel cell system according to an example embodiment.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

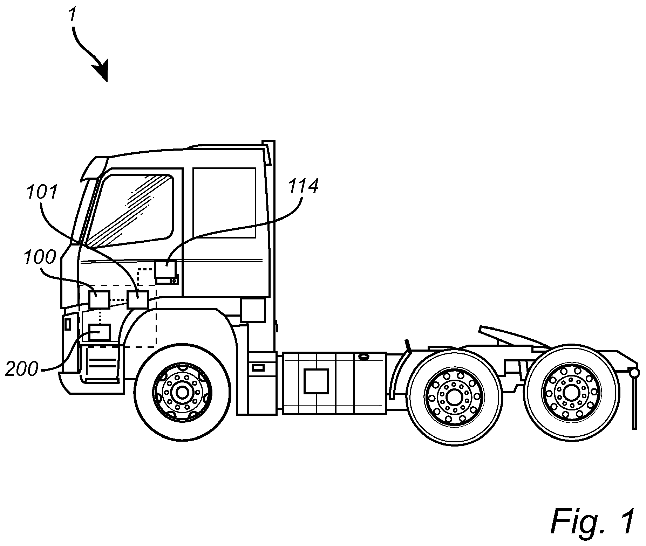

With particular reference to Fig. 1, there is depicted a vehicle 1 in the form of a truck. The vehicle comprises a traction motor 101 for propelling the wheels of the vehicle. The traction motor 101 is here provided in the form of an electric machine arranged to receive electric power from a battery (not shown) or directly from a fuel cell system 100 which is described in further detail below. The fuel cell system 100 is part of a system 10 further including a compressed air system 200 in fluid communication with the fuel cell system 100, as further described herein. The vehicle 1 also comprises a control unit 114 for controlling various operations and functionalities as will also be described in further detail below.

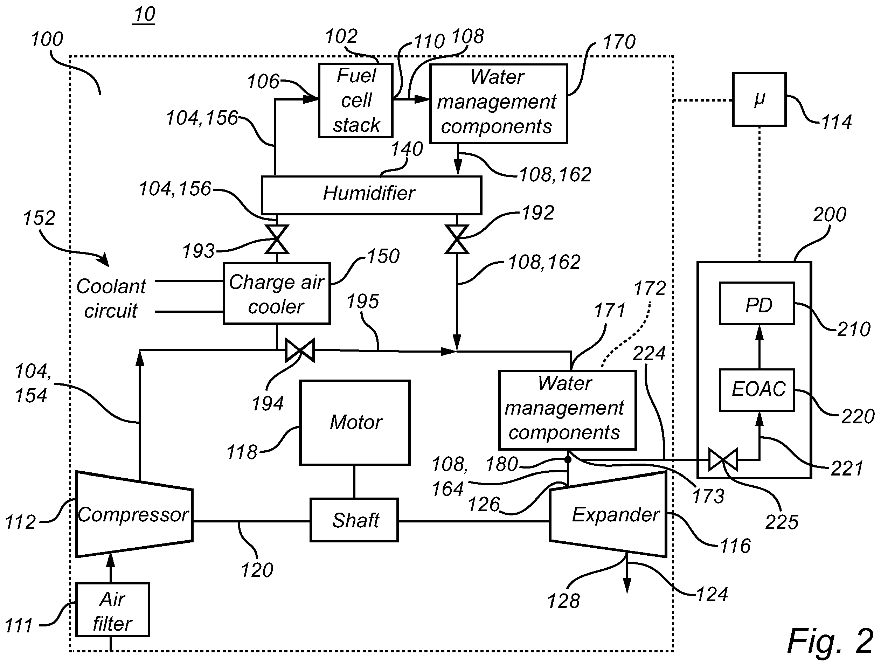

In order to describe the system 10 in more detail, reference is made to Fig. 2 which is a schematic illustration of the system according to an example embodiment. The system 10 comprises the fuel cell system 100 and the compressed air system 200. The compressed air system 200 is further arranged in fluid communication with a pneumatic device 210 of the vehicle, or an external pneumatic device connected to the vehicle. As such the compressed air system 200 is arranged to supply compressed air to the pneumatic device 210. Further details of the compressed air system will be described below.

The fuel cell system 100 comprises at least one fuel cell 102, also commonly referred to as a fuel cell stack. The at least one fuel cell 102 may generally be composed of more than one fuel cell, such as two fuel cells or a plurality of fuel cells. The fuel cells may form a so-called fuel cell stack. The fuel cells may likewise be arranged in multiple fuel cell stacks, each fuel cell stack comprising multiple fuel cells arranged in a stack configuration. In regard to the fuel cell stack 102 of the fuel cell system 100, each one of the fuel cells making up the fuel cell stack 102 generally comprises an anode side receiving hydrogen as a fuel component and a cathode side receiving compressed air as another fuel component. While there are several different types of fuel cells, distinguished mainly by the type of electrolyte used, a so-called Proton Exchange Membrane (PEM) fuel cell is particularly suitable for use in heavy-duty vehicles, such as the vehicle in Fig. 1. Hence, the fuel cell 102 is here a PEM fuel cell stack.

Turning to Fig. 2, the fuel cell 102 is schematically illustrated and only depicts the cathode side, i.e. the anode side is omitted for simplifying the illustration. Other components such as balance of plant components could also be included in the fuel cell system as are commonly used in the field of fuel cell system.

The fuel cell system 100 further comprises an inlet conduit 104 connected to an inlet end 106 of the cathode side of the fuel cell 102. The inlet conduit 104 is arranged to supply air to the cathode side. The inlet conduit 104 has an inlet 121 in fluid communication with an ambient environment, as illustrated in Fig. 2. The fuel cell system 100 also comprises an outlet conduit 108 connected to an outlet end 110 of the fuel cell 102 cathode side. Hereby, exhaust flow is supplied from the outlet end 110 of the fuel cell 102 and into the outlet conduit 108.

Furthermore, the fuel cell system 100 comprises an air compressor 112. The air compressor 112 is disposed in the inlet conduit 104, as depicted in Fig. 2. In particular, the air compressor 112 is arranged upstream the fuel cell 102 in the inlet conduit 104.

In addition, the fuel cell system 100 comprises an expander 116, and optionally a fuel cell motor 118. The air compressor 112 is connected to the expander 116 and the fuel cell motor 118. The air compressor 112 may be an electrical compressor or a mechanical compressor. The expander 116 may be a turbine. The air compressor and expander are commonly known components in the fuel cell system and thus not further described herein.

By way of example, and according to the depicted example embodiment of Fig. 2, the air compressor 112, the expander 116 and the fuel cell motor 118 are mechanically connected to each other by means of a compressor shaft 120. Hence, the fuel cell motor 118 is arranged to control and operate the air compressor 112 and the expander 118. The air compressor 112 is arranged to receive, and pressurize ambient air 122. The ambient air is supplied to the air compressor 112 via an air filter 111, as illustrated in Fig. 2. The pressurized ambient air is subsequently supplied through the inlet conduit 104 and provided to the inlet end 106 of the fuel cell 102. As illustrated in Fig. 2, the air filter 111 is arranged upstream the air compressor 112. In addition, the air filter 111 is arranged at an inlet 121 of the air inlet conduit 104. The fuel cell system 100 thus comprises the air filter 111 arranged to receive air from the ambient environment.

The expander 116 is connected to the outlet conduit 108 and thus receives, and expands the exhaust flow from the outlet end 110 of the fuel cell 102. The air expanded from the expander 116 is supplied into an exhaust conduit 124 of the fuel cell system 100. In other words, the outlet conduit 108 is connected between the outlet end 110 of the cathode side of the fuel cell and an inlet side 126 of the expander 116 for supplying exhaust from the cathode side to the expander 116. Hence, the outlet conduit 108 is connected to the inlet side 126 of the expander 116, while the exhaust conduit 124 is connected to an exhaust side 128 of the expander 116. The exhaust side 128 of the expander 116 is then connected to the ambient environment. Alternatively, the exhaust side 128 may be connected to a water tank and then exhausted. Thus, expanded air supplied from the expander into the exhaust conduit 124 can be directed to the ambient environment.

By means of the example embodiment depicted in Fig. 2, ambient air 122 is received by the air compressor 112, via the filter 111. The air compressor 112 pressurizes the air and supplies the pressurized air towards the inlet end 106 of the fuel cell 102, where electric power is generated. The fuel cell 102 exhausts cathode exhaust through the outlet end 110 and into the outlet conduit 108. The exhaust flow is further directed into the expander 116, which expands the air and supplies the expanded air to the exhaust conduit 124.

As a further alternative, and as depicted in the exemplified embodiment, the fuel cell system 100 may also comprise a humidifier 140 connected to the inlet conduit 104 and the outlet conduit 108. The humidifier 140 is configured to transfer humidity from the outlet conduit 108 to the inlet conduit 104. The humidifier may control the intake air as well as the exhaust flow from the fuel cell 102 at a desired humidity level.

As illustrated in Fig. 2, the fuel cell system 100 may also comprise a charge air cooler 150, such as a charge air intercooler, arranged in the inlet conduit 104. By way of example, the charge air cooler 150 is positioned in fluid communication between the compressor 112 and the inlet end 106 of the fuel cell 102. When providing a charge air cooler 150 in combination with a humidifier 140, the charge air cooler 150 is arranged in fluid communication between the air compressor 112 and the humidifier 140. The charge air cooler 150 is configured to controllably adjust the intake air before the intake air is supplied to the inlet end 106 of the fuel cell 102. The charge air cooler 150 is here connected to a cooling system or cooling circuit 152 of the vehicle 1, as is commonly known in the art. Although not illustrated, it should also be readily noted that the fuel cell 102 (fuel cell stack) is generally connected to a coolant circuit, as is commonly known in the art.

It should be noted that the inlet conduit 104 may include a number of sub-conduits and additional components. In the example embodiment depicted in Fig. 2, a part of the inlet conduit 104 extending between the air compressor 112 and the inlet end 106 of the cathode side comprises a first inlet conduit portion 154, a second inlet conduit portion 156 and the charge air cooler 150. The first inlet conduit portion 154 connects the air compressor 112 to the charge air cooler 150 and the second inlet conduit 156 connect the charge air cooler 150 to the inlet end 106 of the cathode side.

In Fig. 2, when the inlet conduit 104 and the outlet conduit 108 are defined by first and second conduits, respectively, the humidifier 140 is connected to the second inlet conduit portion 156 and the first outlet conduit portion 162.

As mentioned above, the system 10 also comprises the compressed air system 200 in fluid communication with the fuel cell system 100. As such, the fuel cell system 100 and the compressed air system 200 are arranged to permit a partial flow of air from the cathode side to the compressed air system 200, as will be further described below in relation to Figs. 2 to 4.

The compressed air system 100 is generally configured to pressurize air to a certain level to generate a steady stream of airflow, which may be used for the proper function of pneumatic devices. While the compressed air system generally includes a number of components, such as a compressor, an air cooler, air receiver tank, a dryer and a distribution system, one example of a compressed air system suitable for the system 10 will now be further described herein.

As illustrated in Fig. 2, the compressed air system 200 comprises an electrically operable air compressor 220. The electrically operable air compressor 220 is arranged to compress received air from the outlet conduit 108 of the fuel cell system 100 and transmit the compressed air to a pneumatic device 210 that is powered by compressed air. The pneumatic device 210 is thus in fluid communication with the electrically operable air compressor 220. In this example, the pneumatic device 210 is a braking system. In other words, the electrically operable air compressor 220 is arranged to provide compressed air to the braking system of the vehicle. The compressed air is generally the main working fluid to achieve the braking function. However, the compressed air system may be connected to other types of pneumatic devices of the vehicle, such as a suspension system of the vehicle, an on-board crane system, a hauling system, pneumatic controllable actuators such as CLB (i.e. (Backpressure device), an EGR valve, a buffer air for bearing systems or any other types of auxiliary devices and/or systems of the vehicle operable by means of compressed air. The pneumatic system can operate in different modes according to various driving phases/modes when the vehicle is moving and/or, if relevant for the type of truck, according to various operating modes when the vehicle is at work at null speed.

The electrically operable air compressor 220 is generally operated by an electric motor. Thus, the electrically operable air compressor is an electric operated air compressor. The electric motor can either be the motor 118 or another electric motor (not shown) that is comprised in the vehicle. The connection between the electrically operable air compressor 220 and the electric motor is mechanical. Typically, no clutch or any device for selective connection is provided between the electrically operable air compressor 220 and the rotor of the electric motor. The electric motor is typically powered by the battery of the vehicle and/or by electric power from the fuel cell system. Other options may also be contemplated depending on type of vehicle. Optionally, the compressed air system may include an air production modulator, APM (although not shown). The function of the APM is to dry/clean the compressed air and distribute it to the compressed air consumers such as the air brakes, suspensions, gearbox or any other pneumatic devices. Further, the control unit 114 is here configured to control the electrically operable air compressor 220 on the basis of a selected drive mode of the vehicle.

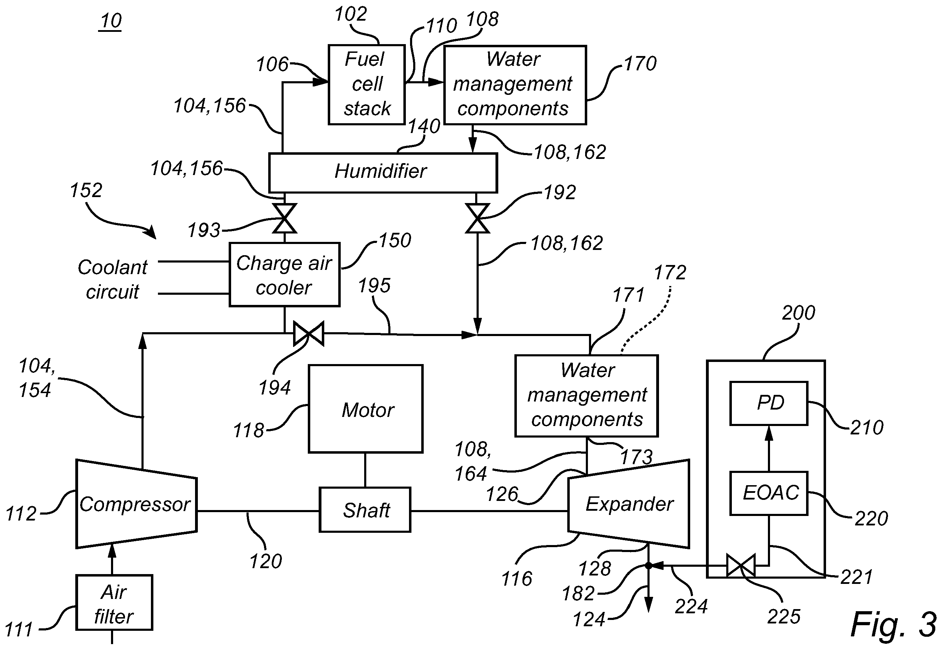

Turning now again to the connection between the fuel cell system 100 and the compressed air system, there is depicted one example embodiment of the system 10, in which the compressed air system 200 is connected to the outlet conduit 108 of the fuel cell system 100. The compressed air system 200 can be connected and in fluid communication with the outlet conduit of the fuel cell system in several different manners. In Fig. 2, the compressed air system 200 is connected to a position 180 upstream the inlet side 126 of the expander 116. In another example embodiment, as illustrated in Fig. 3. the compressed air system 200 is connected to a position 182 downstream the exhaust side 128 of the expander 116.

In particular, as illustrated in Fig. 2, the electrically operable air compressor 220 comprises an air inlet 221 that is connected to the outlet conduit 108. In this example, the air inlet 221 of the compressor 220 is connected to the outlet conduit 108 by means of an interconnecting fluid conduit 224. The interconnecting fluid conduit 224 may be an extension of the air inlet 221. Alternatively, the interconnecting fluid conduit 224 may be a separate part of the system 10 configured to fluidly interconnect the fuel cell system 100 with the compressed air system 200.

By connecting the air inlet 221 of the electrically operable air compressor 220 to the outlet conduit 108, the electrically operable air compressor 220 is arranged to receive exhaust air from the cathode side of the fuel cell 102.

As can further be seen in Fig. 2, the fuel cell system 100 here comprises a number of optional water management components 170 and 172. The water management components 170 and 172 are disposed in the outlet conduit 108. The water management components 170 and 172 are adapted to work as a water separator, i.e. to remove any water from the exhausted air from the fuel cell. Alternatively, or in addition, the water management component may be comprised in the humidifier 140. In a fuel cell system 100 comprising one or more water management components, it may be favorable to extract air to the compressed air system 200 downstream the water management components. It may also be possible to provide a fuel cell system without any water management component in the outlet conduit. Hence, these water management components are generally optional components of the fuel cell system 100.

In the example embodiment illustrated in Fig. 2, a part of the outlet conduit 108 extending between the outlet end 110 of the fuel cell 102 and the inlet side 126 of the expander 116 comprises a first outlet conduit portion 162, a second outlet conduit portion 164 and the water management component 172. Further, as illustrated in Fig. 2, the first outlet conduit portion 162 connects the outlet end 110 of the fuel cell 102 to an inlet side 171 of the water management component 172, and the second outlet conduit 164 connects an outlet side 173 of the water management component 172 to the inlet side 126 of the expander 116. Moreover, as illustrated in Fig. 2, the first outlet conduit 162 interconnects the outlet end 110 of the fuel cell 102 with the water management component 170 and the humidifier 140, which are disposed fluidly in-between the outlet end 110 of the fuel cell 102 and the inlet side 126 of the expander 116. Other arrangements of the components may also be possible.

As mentioned above, the air inlet 221 of the electrically operable air compressor 220 can be connected to the outlet conduit 108 at any one of the position 180 (Fig. 2) upstream the inlet side 126 of the expander 116 and the position 182 (Fig. 3) downstream the exhaust side 128 of the expander 116. Hence, when the electrically operable air compressor 220 is connected to the position 180 upstream the inlet side 126 of the expander 116, the electrically operable air compressor 220 is connected to the second outlet conduit 164. In a similar vein, when the electrically operable air compressor 220 is connected to the position 182 downstream the exhaust side 128 of the expander 116, the electrically operable air compressor 220 is connected to the exhaust conduit 124.

It is also conceivable to provide a system 10 in which both options illustrated in Figs. 2 and 3 are present in the same system. Hence, although not explicitly illustrated, a combination of a system 10 as depicted in Figs. 2 and 3 would provide a system 10 having the air inlet 221 of the electrically operable air compressor 220 connected to the outlet conduit at the position 180 upstream the inlet side of the expander and at the position 182 downstream the exhaust side of the expander. Such connection can be provided by an interconnecting fluid conduit 224 having two branches extending from the air inlet 221 to each one of the position 180 and the position 182. This arrangement of the system would allow to switch between the positions 180 and 182 in view of the prevailing operating condition of the system 10 and the vehicle 1. Hence, a two-step flow arrangement is achieved. By way of example, air directed from the pre-expander position 180 may typically provide a higher inlet pressure which gives a higher outlet pressure and mass flow for a specific compressor speed compared to the post-expander position 182.

Turning again to Fig. 2, the fuel cell system may comprise one or more valves for regulating the flow direction of the air in the cathode side of the fuel cell system 100. The valve arrangements are generally configured to block the flow of air in a certain direction and/or shut down the fuel cell 102 from the ambient environment when the fuel cell 102 is shut down. By way of example, each one of the valve arrangements is a conventional on-off valve, also denoted as a shut off valve. On-off valves can be provided in several different manners, such as ball valves, butterfly valves, gate valves, plug valves and the like.

The fuel cell system 100 as depicted in Fig. 2 comprises an outlet conduit valve arrangement 192 arranged in the first outlet conduit portion 162. The outlet conduit valve arrangement 192 is configured to prevent that air can flow to the fuel cell 102 in the outlet conduit 108 when the fuel cell 102 is in an inactive state or non-operative state. By way of example, the inactive state or non-operative state of the fuel cell corresponds to a state when the fuel cell system is shut-down. In other words, the outlet conduit valve arrangement 192 is operable to block the flow of air from the ambient environment at the exhaust side 124 of the fuel cell system 100 to the fuel cell 102 in its inactive state or non-operative state. The outlet conduit valve arrangement 192 is controllable by the control unit 114. By way of example, the outlet conduit valve arrangement 192 is configured to open and close the flow passage in the outlet conduit 108 in response to a control signal from the control unit 114. Hence, when the fuel cell system 100 is in an operating state, the outlet conduit valve arrangement 192 is controlled by the control unit 114 to be in an open state, thus permitting a flow of air from the fuel cell 102 to the compressed air system 200. However, when the fuel cell system 100 is in the non-operative state, the outlet conduit valve arrangement 192 is controlled by the control unit 114 to be in a closed state, thus preventing a flow of air from the ambient environment to the fuel cell 102.

In addition, the fuel cell system 100 as depicted in Fig. 2 comprises an inlet conduit valve arrangement 193 arranged in the second inlet conduit portion 156. The inlet conduit valve arrangement 193 is configured to prevent that air can flow to the fuel cell 102 in the inlet conduit 104 when the fuel cell 102 is in the inactive state or non-operative state. In other words, the inlet conduit valve arrangement 193 is operable to block the flow of air from the ambient environment at the inlet side 121 of the fuel cell system 100 to the fuel cell 102 in its inactive state or non-operative state. The inlet conduit valve arrangement 193 is controllable by the control unit 114. By way of example, the inlet conduit valve arrangement 193 is configured to open and close the flow passage in the inlet conduit 104 in response to a control signal from the control unit 114. Hence, when the fuel cell system 100 is in the operating state, the inlet conduit valve arrangement 193 is controlled by the control unit 114 to be in an open state, thus permitting a flow of air from the ambient environment at 121 to the fuel cell 102. However, when the fuel cell system 100 is in the non-operative state, the inlet conduit valve arrangement 193 is controlled by the control unit 114 to be in a closed state, thus preventing a flow of air from the ambient environment at 121 to the fuel cell 102.

Typically, the valves 192 and 193 are normally set in a closed state when the fuel cell stack is in the inactive state and/or in the shut-down state. Otherwise, it may not be possible to control that there is no backflow into the fuel cell 102 with unfiltered air/exhaust or a so called drying of the system.

Moreover, as illustrated in Fig. 2, the fuel cell system 100 as depicted in Fig. 2 comprises a fuel cell by-pass conduit 195. The fuel cell by-pass conduit 195 extends between the inlet conduit 104 and the outlet conduit 108. By way of example, the fuel cell by-pass conduit 195 is connected to a position of the first inlet conduit portion 154 and to position of the second outlet conduit portion 162, as illustrated in Fig. 2. In other words, the fuel cell by-pass conduit 195 is connected to a position in the inlet conduit that is upstream the fuel cell 102 and to a position in the outlet conduit that is downstream the fuel cell 102. Optionally, the fuel cell by-pass conduit 195 comprises a by-pass conduit valve arrangement 194. The by-pass conduit valve arrangement 194 is configured to open and close the fuel cell by-pass conduit 195 in response to a control signal from the control unit 114. By way of example, when the fuel cell system 100 is in the operating state, the by-pass conduit valve arrangement 194 is controlled by the control unit 114 to be in a closed state, thus preventing a flow of air in the by-pass conduit 195 while directing the air through the fuel cell 102. On the other side, when the compressed air system is to be operated, e.g. when the electrically operable air compressor 220 is to receive and compress air from the outlet conduit 108, the by-pass conduit valve arrangement 194 is controlled by the control unit 114 to be in an open state, thus permitting a flow of air in the by-pass conduit 195. In this manner, it becomes possible to reduce the risk of having the electrically operable air compressor 220 to use unfiltered air that may flow from the ambient environment at 124 and backwards in the outlet conduit 108.

Depending on the location of the charge-air-cooler, the by-pass conduit valve arrangement 194 and by-pass conduit 195 may be arranged upstream the charge-air-cooler. In such example, the by-pass conduit valve arrangement 194 may be a three-way valve.

Generally, although strictly not necessary, each one of the valve arrangements 192, 193 and 194 is controllable in a coordinated manner by the control unit 114 in response to the operating mode of the vehicle. The operating mode of the vehicle here refers to an operating mode of the fuel cell system 100 and the operating mode of the compressed air system 200. As such, the control circuitry of the control unit 114 is configured to control the flow of air from the fuel cell system 100 to the compressed air system 200 in response to a change in the operating mode of the vehicle.

In a similar vein, the compressed air system 200 comprises an inlet valve arrangement 225 disposed in-between the outlet conduit 108 and the air inlet 221 of the electrically operable air compressor 220. By way of example, the inlet valve arrangement 225 is arranged in the interconnecting fluid conduit 224. The inlet valve arrangement 225 is configured to prevent that air can flow to the electrically operable air compressor 220 from the exhaust side 124 of the fuel cell system 100 when the electrically operable air compressor 220 is in an inactive state or a non-operative state. The inlet valve arrangement 225 is operable in response to a control signal from the control unit 114 indicative of the operating mode of the electrically operable air compressor 220. By way of example, the inlet valve arrangement 225 is a conventional on-off valve, e.g. a so-called shut off valve. In particular, the inlet valve arrangement 225 is operable to be set in a closed state (preventing flow to the electrically operable air compressor 220) when the electrically operable air compressor 220 is in the inactive state or a non-operative state and to be set in an open state (allowing air flow to the electrically operable air compressor 220) when the electrically operable air compressor 220 is in the active state or operating state. Hence, the inlet valve arrangement 225 is operable in response to the activation state of the electrically operable air compressor 220. In this manner, it becomes possible to avoid that the flow passage between electrically operable air compressor 220 and atmosphere is opened, thus reducing the risk of having the electrically operable air compressor 220 to act as a vacuum pump.

To sum up, the system 10 comprises a number of valve arrangements 192, 193, 194 and 225 operable in response to the activation state of the fuel cell system 100 and the compressed air system 200 (e.g. the activation state of the electrically operable air compressor 220).

At least for the above reasons, the electrically operable air compressor 220 may favorably be in communication with the control unit 114 so as to allow for a precise operation of the engagement of the electrically operable air compressor 220 in response to the operation mode of the vehicle and the fuel cell system 100. By way of example, the control unit 114 is in communication with the electrically operable air compressor 220 and the air compressor 112. Further, the control unit 114 is configured to operate the air compressor 112 in response to the activation state of the electrically operable air compressor 220. In particular, the control unit 114 is configured to regulate the compressor speed air flow of the air compressor 112 in response to the activation state of the electrically operable air compressor 220.

As mentioned above, the system 10 is operable by means of the control unit 114. The control unit 114 comprises the control circuitry (not shown) configured to control the flow of air from the fuel cell system 100 to the compressed air system 200. Typically, the power of the fuel cell 102 is decisive of the magnitude of the air flow to the electrically operable air compressor 220. Thus, the power of the fuel cell 102 is decisive for the compressor speed of the electrically operable air compressor 220 as well as for the speed of the expander 116. Accordingly, the control circuitry is typically configured to control the flow of air from the fuel cell system 100 to the electrically operable air compressor 220 in response to any one of an operating mode of the vehicle and power demand from the vehicle. In particular, the control circuitry is operable to control the flow of air from the fuel cell system 100 to the electrically operable air compressor 220 in response to a change in any one of the operating mode of the vehicle and the power demand from the vehicle.

In addition, or alternatively, the electrically operable air compressor 220 is controlled in response to the activation state of the fuel cell 102. By way of example, the valve arrangements 192, 193, 194 and 225 are operable in response to a control signal from the control unit 114 indicating the activation state of the fuel cell 102. In a situation when the control unit 114 receives a control signal indicating that the fuel cell 102 is to be set in its in-active state (to be shut down), the control unit 114 controls the valve arrangements 192 193 to set in a closed state, while controlling the valve arrangements 194 and 225 to be set in an open state. In this manner, no flow of air is directed to the fuel cell 102. Rather, the flow of air is allowed to flow in the by-pass conduit 195 and through the conduit 224 to the electrically operable air compressor 220. Hereby, the air compressor 112 is capable of operating in an active state so as to provide a sufficient pressure and flow for the electrically operable air compressor 220. However, as described above, the usual operation of the system 100 is that the flow of air passes through the fuel cell 102 and then though the conduit 224 and valve 225, rather than through the valve 194 and the by-pass conduit 195.

Although not depicted in Fig. 2, it should be readily appreciated that the fuel cell system 100 may comprise one or more temperature sensors and pressure sensors to provide further control data for the control unit and the system. The application of such sensors in a fuel cell system is generally arranged in view of the type of fuel cell system and vehicle, as is commonly known in the art. The fuel cell system may also contain temperature sensors in the fuel cell, or in a housing of the fuel cell. Hereby, the temperature level of the fuel cell can be determined.

Also, as mentioned above, a further example embodiment of the system 10 is illustrated in Fig. 3. The fuel cell system in Fig. 2 and the fuel cell system in Fig. 3 shares the above-described features described and illustrated in Fig. 2 except that the compressed air system 200 in Fig. 3 is connected to the position 182 of the outlet conduit 108 rather than to the position 180, as described in relation to Fig. 2.

It may also be possible to provide a fuel cell system 100 as described in Fig. 2 without some of the components and features above. By way of example, although not expressly illustrated, the system 10 may comprise a fuel cell system 100 without an expander and some of the other components in Figs. 2 and 3. In brief, the fuel cell system 100 comprises the fuel cell 102 having the anode side and the cathode side, the outlet conduit 108 connected to the outlet end 110 of the cathode side, the air inlet conduit 104 connected to the inlet end 106 of the cathode side for supply of air to the cathode side of the fuel cell. In addition, the fuel cell system 100 comprises the air compressor 112 arranged at the air inlet conduit and the air filter 111 arranged to receive air from the ambient environment. Analogous to the example in e.g. Fig. 2, the filter 111 is arranged at an inlet 121 of the air inlet conduit 104. Moreover, the system 10 generally comprises the compressed air system 200 as described in any one of the example embodiments illustrated in Figs. 2 and 3. As mentioned in relation to Figs. 2 and 3, the air inlet 221 of the electrically operable air compressor 220 is connected to the outlet conduit 108. The above system 100 without an expander may be beneficial for passenger cars and/or trucks that mainly operate with a low load.

Regarding the control unit 114, the control unit may for example be an electronic control unit (ECU) comprised with the vehicle. However, the control unit may likewise be provided by a number of sub-control units (not illustrated), wherein each one of the control units may generally comprise a corresponding control circuitry, processor or the like. By way of example, the fuel cell system comprises a first sub-control unit and the compressed air system comprises a second sub-control unit, wherein the sub-control units are arranged in communication with each other so as to form the control unit 114. To this end, the sub-control units are collectively configured to control the flow of air from the fuel cell system to the electrically operable air compressor in response to any one of an operating mode of the vehicle and a power demand from the vehicle, as described above.

In an example when the compressed air system comprises the air production modulator, APM, the ECU may be configured to control the fuel cell system while a sub-control unit comprised in the APM may be configured to control the electrically operable air compressor. Further, in such example, the ECU and the sub-control unit of the APM are arranged in communication with each other to receive and transfer signal indicating e.g. needed inlet pressure of the electrically operable air compressor for supplying compressed air to downstream components such as the pneumatic device. Other arrangements of the control unit are also conceivable.

The control unit 114 and each one of the corresponding sub-control units may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the control circuitry or processor (e.g., via a circuit or any other wired, wireless, or network connection) and includes computer code for executing one or more processes described herein.

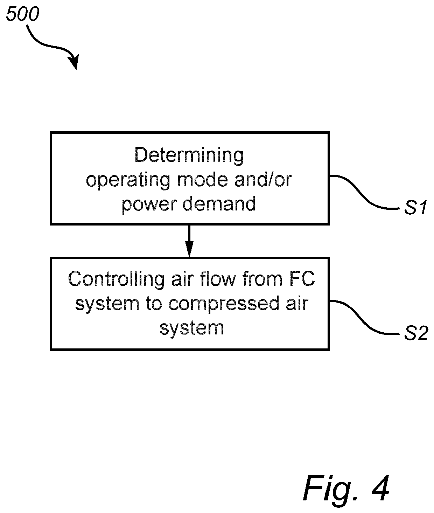

In order to sum up, reference is made to Fig. 4 which is a flow chart of a method 500 of controlling the system according to an example embodiment. During operation, the control unit 114 determines S1 a current operating mode for the vehicle 1 and/or a power demand from the vehicle 1. Detailed example embodiments of various operating modes are described above. Based on the determined current operating mode and/or the power demand, the control unit 114 controls S2 the valve arrangements 192, 193, 194 and 225. Hence, the control unit 114 controls the flow of air from the fuel cell system 100 to compressed air system 200. As mentioned above, the control unit 114 is operable to control the flow of air from the fuel cell system to the compressed air system based on an activation state of the electrically operable air compressor. By way of example, the control unit 114 is operable to control the flow of air in the by-pass channel extending between inlet conduit and the outlet conduit and the flow of air to and from the fuel cell based on the activation state of the electrically operable air compressor. In particular, the control unit 114 is operable to control the by-pass conduit valve arrangement 194 to either direct the intake air through the fuel cell or to bypass the fuel cell, i.e. direct the intake air from the air compressor 112 to the compressed air system 200 without passing the fuel cell 102.

Thanks to the system 10, it becomes possible to make use of filtered air from the filter 111 of the fuel cell system 100 at the fuel cell cathode side to boost the electrically driven vehicle air compressor 220 of the compressed air system 200 of the vehicle 1. In particular, by using air from the fuel cell air inlet, it becomes possible to provide a compressed air system without a separate air filter, e.g. it becomes possible to omit the additional filter at the vehicle brake compressor inlet. Hence, the system 10 provides a simpler, yet effective system comprising the fuel cell system and the compressed air system.

## Claims

1. A system (10) for a vehicle (1), the system (10) having a fuel cell system (100) and a compressed air system (200) for supplying compressed air to a pneumatic device (210)
said fuel cell system (100) comprising:
at least one fuel cell (102) having an anode side and a cathode side,
an outlet conduit (108) connected to an outlet end (110) of the cathode side,
an air inlet conduit (104) connected to an inlet end (106) of the cathode side for supply of air to the cathode side of the at least one fuel cell,
an air compressor (112) disposed in the air inlet conduit,
an air filter (111) arranged to receive air from an ambient environment, said air filter being arranged at an inlet of the air inlet conduit,
said compressed air system (200) comprising:
an electrically operable air compressor (220) configured to be connected to the pneumatic device (210) so as to be arranged in fluid communication with the electrically operable air compressor (220) wherein
an air inlet (221) of the electrically operable air compressor (220) is connected to the outlet conduit (108) at a selected position (180, 182), whereby the electrically operable air compressor (220) is configured to receive exhaust air from the cathode side of the at least one fuel cell (102).

2. The system according to claim 1, further comprising an expander (116), said outlet conduit (108) being connected between the outlet end (110) of the cathode side and an inlet side (126) of the expander (116) for supply of an exhaust flow from the cathode side to the expander (116) and an exhaust conduit (124) connected to an exhaust side (128) of the expander; wherein
the air inlet (221) of the electrically operable air compressor (220) is connected to the outlet conduit (108) at any one of a position (180) upstream the inlet side of the expander and at a position (182) downstream the exhaust side of the expander (116).

3. The system according to claim 2, wherein a part of the outlet conduit (108) extending between the outlet end of the at least one fuel cell (102) and the inlet side of the expander (116) comprises a first outlet conduit portion (162), a second outlet conduit portion (164) and a water management component (172), the first outlet conduit portion (162) connecting the outlet end of the at least one fuel cell (102) to an inlet side (171) of the water management component, and the second outlet conduit portion (164) connecting an outlet side (173) of the water management component to the inlet side of the expander.

4. The system according to claim 3 3, wherein, when the electrically operable air compressor (220) is connected to the position upstream the inlet side of the expander, the electrically operable air compressor is connected to the second outlet conduit portion (164).

5. The system according to any one of the preceding claims, wherein a part of the inlet conduit extending between the air compressor (112) and the inlet end of the cathode side comprises a first inlet conduit portion (154), a second inlet conduit portion (156) and a charge air cooler (150), the first inlet conduit portion (154) connecting the air compressor to the charge air cooler, and the second inlet conduit portion (156) connecting the charge air cooler to the inlet end of the cathode side.

6. The system according to any one of the preceding claims 2 to 5, wherein the air compressor (112) is connected to the expander (116) and a fuel cell motor (118).

7. The system according to any one of the preceding claims, wherein the fuel cell system (100) further comprises an outlet conduit valve arrangement (192) arranged in the outlet conduit, said outlet conduit valve arrangement being configured to prevent air to flow to the at least one fuel cell (102) via the outlet conduit when the at least one fuel cell (102) is in any one of an inactive state or non-operative state.

8. The system according to any one of the preceding claims, wherein the fuel cell system (100) further comprises an inlet conduit valve arrangement (193) arranged in the inlet conduit (104), said inlet conduit valve arrangement being configured to prevent air to flow to the at least one fuel cell via the inlet conduit when the at least one fuel cell (102) is in any one of an inactive state or non-operative state.

9. The system according to any one of the preceding claims, wherein the fuel cell system (100) further comprises a fuel cell by-pass conduit (195) extending between the inlet conduit and the outlet conduit and a by-pass conduit valve arrangement (194) disposed in said fuel cell by-pass conduit, said by-pass conduit valve arrangement being configured to open and close the fuel cell by-pass conduit in response to an activation state of the electrically operable air compressor (220).

10. The system according to any one of the preceding claims, wherein the compressed air system further comprises an inlet valve arrangement (225) disposed in-between the outlet conduit and the air inlet of the electrically operable air compressor.

11. The system according to any one of the preceding claims, further comprising a control unit (114) in communication with the fuel cell system and the compressed air system, said control unit having a control circuitry configured to control the flow of air from the fuel cell system to the electrically operable air compressor in response to any one of an operating mode of the vehicle and a power demand from the vehicle.

12. The system according to claim 11, wherein the control circuitry is operable to control the flow of air from the fuel cell system to the electrically operable air compressor in response to a change in any one of the operating mode of the vehicle and the power demand from the vehicle.

13. The system according to claim 12, wherein the electrically operable air compressor is controllable in response to an activation state of the at least one fuel cell.

14. A method (500) for controlling a system (10) of a vehicle (1), said system (10) having a fuel cell system (100) and a compressed air system (200) for supplying compressed air to a pneumatic device (210), said fuel cell system (100) comprising at least one fuel cell (102), an outlet conduit (108) connected to an outlet end (110) of a cathode side, an air inlet conduit (104) connected to an inlet end (106) of the cathode side for supply of air to the cathode side of the at least one fuel cell (102), an air compressor (112) disposed in the air inlet conduit (104), an air filter (111) arranged to receive air from the ambient environment, said air filter (111) being arranged at an inlet of the air inlet conduit (104); said compressed air system (200) comprising an electrically operable air compressor (220) configured to be connected to the pneumatic device (210) so as to be arranged in fluid communication with the electrically operable air compressor (220); wherein an air inlet (221) of the electrically operable air compressor (220) is connected to the outlet conduit (108) at a selected position, whereby the electrically operable air compressor (220) is configured to receive exhaust air from the cathode side of the at least one fuel cell (102),
said method comprising:
determining (S1) any one of a current operating mode and a power demand of the vehicle,
controlling (S2) the flow of air from the fuel cell system to the compressed air system based on the any one of the determined current operating mode and the power demand.

15. A vehicle at least partially propelled by an electric traction motor (101), the electric traction motor being electrically connected to a fuel cell system of a system according to any one of claims 1 - 13.

## Patentansprüche

1. System (10) für ein Fahrzeug (1), wobei das System (10) ein Brennstoffzellensystem (100) und ein Druckluftsystem (200) zum Zuführen von Druckluft zu einer pneumatischen Vorrichtung (210) aufweist,
das Brennstoffzellensystem (100) umfassend:
mindestens eine Brennstoffzelle (102) mit einer Anodenseite und einer Kathodenseite,
einer Auslassleitung (108), die mit einem Auslassende (110) der Kathodenseite verbunden ist,
einer Lufteinlassleitung (104), die mit einem Einlassende (106) der Kathodenseite verbunden ist, um der Kathodenseite der mindestens einen Brennstoffzelle Luft zuzuführen,
einen Luftkompressor (112), der in der Lufteinlassleitung angeordnet ist,
einen Luftfilter (111), der angeordnet ist, um Luft aus einer Umgebung aufzunehmen, wobei der Luftfilter an einem Einlass der Lufteinlassleitung angeordnet ist,
das Druckluftsystem (200) umfassend:
einen elektrisch betreibbaren Luftkompressor (220), der so konfiguriert ist, dass er mit der pneumatischen Vorrichtung (210) verbunden werden kann, so dass er in Fluidverbindung mit dem elektrisch betreibbaren Luftkompressor (220) angeordnet ist,
wobei ein Lufteinlass (221) des elektrisch betreibbaren Luftkompressors (220) mit der Auslassleitung (108) an einer ausgewählten Position (180, 182) verbunden ist, wodurch der elektrisch betreibbare Luftkompressor (220) konfiguriert ist, um Abluft von der Kathodenseite der mindestens einen Brennstoffzelle (102) zu empfangen.

2. System nach Anspruch 1, ferner umfassend einen Expander (116), wobei die Auslassleitung (108) zwischen dem Auslassende (110) der Kathodenseite und einer Einlassseite (126) des Expanders (116) angeschlossen ist, um einen Abgasstrom von der Kathodenseite dem Expander (116) zuzuführen, und eine Abgasleitung (124), die mit einer Auslassseite (128) des Expanders verbunden ist;
wobei der Lufteinlass (221) des elektrisch betreibbaren Luftkompressors (220) mit der Auslassleitung (108) an einer beliebigen Position (180) vor der Einlassseite des Expanders und an einer Position (182) nach der Auslassseite des Expanders (116) verbunden ist.

3. System nach Anspruch 2, wobei ein Teil der Auslassleitung (108), der sich zwischen dem Auslassende der mindestens einen Brennstoffzelle (102) und der Einlassseite des Expanders (116) erstreckt, einen ersten Auslassleitungsabschnitt (162), einen zweiten Auslassleitungsabschnitt (164) und eine Wassermanagementkomponente (172) umfasst, wobei der erste Auslassleitungsabschnitt (162) das Auslassende der mindestens einen Brennstoffzelle (102) mit einer Einlassseite (171) der Wassermanagementkomponente verbindet und der zweite Auslassleitungsabschnitt (164) eine Auslassseite (173) der Wassermanagementkomponente mit der Einlassseite des Expanders verbindet.

4. System nach Anspruch 3, wobei, wenn der elektrisch betreibbare Luftkompressor (220) mit der Position vor der Einlassseite des Expanders verbunden ist, der elektrisch betreibbare Luftkompressor mit dem zweiten Auslassleitungsabschnitt (164) verbunden ist.

5. System nach einem der vorhergehenden Ansprüche, wobei ein Teil der Einlassleitung, der sich zwischen dem Luftkompressor (112) und dem Einlassende der Kathodenseite erstreckt, einen ersten Einlassleitungsabschnitt (154), einen zweiten Einlassleitungsabschnitt (156) und einen Ladeluftkühler (150) umfasst, wobei der erste Einlassleitungsabschnitt (154) den Luftkompressor mit dem Ladeluftkühler verbindet, und der zweite Einlassleitungsabschnitt (156) den Ladeluftkühler mit dem Einlassende der Kathodenseite verbindet.

6. System nach einem der vorhergehenden Ansprüche 2 bis 5, wobei der Luftkompressor (112) mit dem Expander (116) und einem Brennstoffzellenmotor (118) verbunden ist.

7. System nach einem der vorhergehenden Ansprüche, wobei das Brennstoffzellensystem (100) ferner eine Auslassleitungsventilanordnung (192) umfasst, die in der Auslassleitung angeordnet ist, wobei die Auslassleitungsventilanordnung so konfiguriert ist, dass sie verhindert, dass Luft über die Auslassleitung zu der mindestens einen Brennstoffzelle (102) strömt, wenn sich die mindestens eine Brennstoffzelle (102) in einem inaktiven und/oder nicht betriebsbereiten Zustand befindet.

8. System nach einem der vorhergehenden Ansprüche, wobei das Brennstoffzellensystem (100) ferner eine Einlassleitungsventilanordnung (193) umfasst, die in der Einlassleitung (104) angeordnet ist, wobei die Einlassleitungsventilanordnung so konfiguriert ist, dass sie verhindert, dass Luft über die Einlassleitung zu der mindestens einen Brennstoffzelle strömt, wenn sich die mindestens eine Brennstoffzelle (102) in einem inaktiven und/oder nicht betriebsbereiten Zustand befindet.

9. System nach einem der vorhergehenden Ansprüche, wobei das Brennstoffzellensystem (100) ferner eine Brennstoffzellen-Umgehungsleitung (195), die sich zwischen der Einlassleitung und der Auslassleitung erstreckt, und eine Umgehungsleitungsventilanordnung (194) umfasst, die in der Brennstoffzellen-Umgehungsleitung angeordnet ist, wobei die Umgehungsleitungsventilanordnung so konfiguriert ist, dass sie die Brennstoffzellen-Umgehungsleitung in Reaktion auf einen Aktivierungszustand des elektrisch betreibbaren Luftkompressors (220) öffnet und schließt.

10. System nach einem der vorhergehenden Ansprüche, wobei das Druckluftsystem ferner eine Einlassventilanordnung (225) umfasst, die zwischen der Auslassleitung und dem Lufteinlass des elektrisch betriebenen Luftkompressors angeordnet ist.

11. System nach einem der vorhergehenden Ansprüche, ferner umfassend eine Steuereinheit (114), die mit dem Brennstoffzellensystem und dem Druckluftsystem in Verbindung steht, wobei die Steuereinheit eine Steuerschaltung aufweist, die konfiguriert ist, um den Luftstrom vom Brennstoffzellensystem zum elektrisch betriebenen Luftkompressor als Reaktion auf einen Betriebsmodus des Fahrzeugs und/oder einen Leistungsbedarf des Fahrzeugs zu steuern.

12. System nach Anspruch 11, wobei die Steuerschaltung so betreibbar ist, dass sie den Luftstrom von dem Brennstoffzellensystem zu dem elektrisch betriebenen Luftkompressor als Reaktion auf eine Änderung des Betriebsmodus des Fahrzeugs und/oder des Leistungsbedarfs des Fahrzeugs steuert.

13. System nach Anspruch 12, wobei der elektrisch betriebene Luftkompressor in Abhängigkeit von einem Aktivierungszustand der mindestens einen Brennstoffzelle steuerbar ist.

14. Verfahren (500) zur Steuerung eines Systems (10) eines Fahrzeugs (1), wobei das System (10) ein Brennstoffzellensystem (100) und ein Druckluftsystem (200) zum Zuführen von Druckluft zu einer pneumatischen Vorrichtung (210) aufweist, wobei das Brennstoffzellensystem (100) mindestens eine Brennstoffzelle (102) umfasst, eine mit einem Auslassende (110) einer Kathodenseite verbundene Auslassleitung (108), eine Lufteinlassleitung (104), die mit einem Einlassende (106) der Kathodenseite verbunden ist, um der Kathodenseite der mindestens einen Brennstoffzelle (102) Luft zuzuführen, einen Luftkompressor (112), der in der Lufteinlassleitung (104) angeordnet ist, einen Luftfilter (111), der angeordnet ist, um Luft aus einer Umgebung aufzunehmen, wobei der Luftfilter (111) an einem Einlass der Lufteinlassleitung (104) angeordnet ist;
wobei das Druckluftsystem (200) einen elektrisch betreibbaren Luftkompressor (220) umfasst, der so konfiguriert ist, dass er mit der pneumatischen Vorrichtung (210) verbunden ist, so dass er in Fluidverbindung mit dem elektrisch betreibbaren Luftkompressor (220) angeordnet ist;
wobei ein Lufteinlass (221) des elektrisch betreibbaren Luftkompressors (220) mit der Auslassleitung (108) an einer ausgewählten Position verbunden ist, wodurch der elektrisch betreibbare Luftkompressor (220) konfiguriert ist, um Abluft von der Kathodenseite der mindestens einen Brennstoffzelle (102) zu empfangen,
das Verfahren umfassend:
Bestimmen (S1) eines aktuellen Betriebsmodus und/oder eines Leistungsbedarfs des Fahrzeugs,
Steuern (S2) des Luftstroms vom Brennstoffzellensystem zum Druckluftsystem auf der Grundlage des bestimmten aktuellen Betriebsmodus und/oder des Leistungsbedarfs.

15. Fahrzeug, das mindestens teilweise von einem elektrischen Antriebsmotor (101) angetrieben wird, wobei der elektrische Antriebsmotor elektrisch mit einem Brennstoffzellensystem eines Systems nach einem der Ansprüche 1-13 verbunden ist.

## Revendications

1. Système (10) pour véhicule (1), le système (10) ayant un système de pile à combustible (100) et un système d'air comprimé (200) pour fournir de l'air comprimé à un dispositif pneumatique (210), ledit système de pile à combustible (100) comprenant :
au moins une pile à combustible (102) ayant un côté anode et un côté cathode,
un conduit de sortie (108) relié à une extrémité de sortie (110) du côté cathode,
un conduit d'entrée d'air (104) relié à une extrémité d'entrée (106) du côté cathode pour alimenter en air le côté cathode de la pile à combustible,
un compresseur d'air (112) disposé dans le conduit d'entrée d'air,
un filtre à air (111) agencé pour recevoir l'air d'un environnement ambiant, ledit filtre à air étant agencé à une entrée du conduit d'entrée d'air, ledit système d'air comprimé (200) comprenant :
un compresseur d'air à commande électrique (220) configuré pour être connecté au dispositif pneumatique (210) de manière à être disposé en communication fluidique avec le compresseur d'air à commande électrique (220), une entrée d'air (221) du compresseur d'air à commande électrique (220) étant reliée au conduit de sortie (108) à une position sélectionnée (180, 182), le compresseur d'air à commande électrique (220) étant configuré pour recevoir l'air d'échappement du côté cathode de l'au moins une pile à combustible (102).

2. Système selon la revendication 1, comprenant en outre un détendeur (116), ledit conduit de sortie (108) étant connecté entre l'extrémité de sortie (110) du côté cathode et un côté entrée (126) du détendeur (116) pour fournir un flux d'échappement depuis le côté cathode au détendeur (116), et un conduit d'échappement (124) connecté à un côté échappement (128) du détendeur ;
l'entrée d'air (221) du compresseur d'air à commande électrique (220) étant reliée au conduit de sortie (108) à une position quelconque parmi une position (180) en amont du côté entrée du détendeur et à une position (182) en aval du côté sortie du détendeur (116).

3. Système selon la revendication 2, dans lequel une partie du conduit de sortie (108) s'étendant entre l'extrémité de sortie de l'au moins une pile à combustible (102) et le côté entrée du détendeur (116) comprend une première partie de conduit de sortie (162), une seconde partie de conduit de sortie (164) et un composant de gestion d'eau (172), la première partie de conduit de sortie (162) reliant l'extrémité de sortie l'au moins une pile à combustible (102) à un côté entrée (171) du composant de gestion d'eau, et la seconde partie de conduit de sortie (164) reliant un côté sortie (173) du composant de gestion d'eau au côté entrée du détendeur.

4. Système selon la revendication 3, dans lequel, lorsque le compresseur d'air à commande électrique (220) est connecté à la position en amont du côté entrée du détendeur, le compresseur d'air à commande électrique est connecté à la seconde partie de conduit de sortie (164).

5. Système selon l'une quelconque des revendications précédentes, dans lequel une partie du conduit d'entrée s'étendant entre le compresseur d'air (112) et l'extrémité d'entrée du côté cathode comprend une première partie de conduit d'entrée (154), une seconde partie de conduit d'entrée (156) et un refroidisseur d'air de suralimentation (150), la première partie de conduit d'entrée (154) reliant le compresseur d'air au refroidisseur d'air de suralimentation, et la seconde partie de conduit d'entrée (156) reliant le refroidisseur d'air de suralimentation à l'extrémité d'entrée du côté cathode.

6. Système selon l'une quelconque des revendications précédentes 2 à 5, dans lequel le compresseur d'air (112) est connecté au détendeur (116) et à un moteur à pile à combustible (118).

7. Système selon l'une quelconque des revendications précédentes, dans lequel le système de pile à combustible (100) comprend en outre un agencement de soupape de conduit de sortie (192) disposé dans le conduit de sortie, ledit agencement de soupape de conduite de sortie étant conçu pour empêcher l'air de s'écouler vers l'au moins une pile à combustible (102) via la conduite de sortie lorsque l'au moins une pile à combustible (102) se trouve dans un état inactif ou dans un état de non-fonctionnement.

8. Système selon l'une quelconque des revendications précédentes, dans lequel le système de pile à combustible (100) comprend en outre un agencement de soupape de conduit d'entrée (193) disposé le conduit d'entrée (104), ledit système de soupape de conduite d'entrée étant configuré pour empêcher l'air de s'écouler vers l'au moins une pile à combustible par l'intermédiaire de la conduite d'admission lorsque la ou l'au moins une pile à combustible (102) se trouve dans un état inactif ou dans un état de non-fonctionnement.

9. Système selon l'une quelconque des revendications précédentes, dans lequel le système de pile à combustible (100) comprend en outre un conduit de dérivation de pile à combustible (195) s'étendant entre le conduit d'entrée et le conduit de sortie et un agencement de soupape de conduit de dérivation (194) disposé dans ledit conduit de dérivation de pile à combustible, ledit système de soupape de conduite de dérivation étant configuré pour ouvrir et fermer la conduite de dérivation de pile à combustible en réponse à un état d'activation du compresseur d'air à commande électrique (220).

10. Système selon l'une quelconque des revendications précédentes, dans lequel le système d'air comprimé comprend en outre un agencement de soupape d'entrée (225) disposé entre le conduit de sortie et l'entrée d'air du compresseur d'air à commande électrique.

11. Système selon l'une quelconque des revendications précédentes, comprenant en outre une unité de commande (114) en communication avec le système de pile à combustible et le système d'air comprimé, ladite unité de commande comprenant un circuit de commande configuré pour commander le flux d'air du système de pile à combustible vers le compresseur d'air à fonctionnement électrique en réponse à l'un quelconque parmi un mode de fonctionnement du véhicule et à une demande de puissance du véhicule.

12. Système selon la revendication 11, dans lequel le circuit de commande peut fonctionner pour commander le flux d'air du système de pile à combustible vers le compresseur d'air à commande électrique en réponse à un changement dans l'un quelconque parmi le mode de fonctionnement du véhicule et la demande de puissance du véhicule.

13. Système selon la revendication 12, dans lequel le compresseur d'air à commande électrique peut être commandé en réponse à un état d'activation de l'au moins une pile à combustible.

14. Procédé (500) de commande d'un système (10) d'un véhicule (1), ledit système (10) comprenant un système de pile à combustible (100) et un système d'air comprimé (200) pour fournir de l'air comprimé à un dispositif pneumatique (210), ledit système de pile à combustible (100) comprenant au moins une pile à combustible (102), un conduit de sortie (108) relié à une extrémité de sortie (110) d'un côté cathode, un conduit d'entrée d'air (104) relié à une extrémité d'entrée (106) du côté cathode pour amener de l'air au côté cathode de l'au moins une pile à combustible (102), un compresseur d'air (112) disposé dans le conduit d'entrée d'air (104), un filtre à air (111) agencé pour recevoir de l'air ambiant, ledit filtre à air (111) étant disposé à un entrée du conduit d'entrée d'air (104) ; ledit système d'air comprimé (200) comprenant un compresseur d'air à commande électrique (220) configuré pour être connecté au dispositif pneumatique (210) de manière à être disposé en communication fluidique avec le compresseur d'air à commande électrique (220) ; une entrée d'air (221) du compresseur d'air à commande électrique (220) étant connectée au conduit de sortie (108) à une position sélectionnée, le compresseur d'air à commande électrique (220) étant configuré pour recevoir l'air d'échappement du côté cathode de l'au moins une pile à combustible (102), ledit procédé comprenant :
la détermination (S1) de l'un quelconque parmi un mode de fonctionnement actuel ou une demande de puissance du véhicule,
la régulation (S2) du flux d'air du système de pile à combustible vers le système d'air comprimé en fonction du mode de fonctionnement courant déterminé et de la demande de puissance.

15. Véhicule au moins partiellement propulsé par un moteur à traction électrique (101), le moteur à traction électrique étant électriquement connecté à un système de pile à combustible d'un système selon l'une quelconque des revendications 1 à 13.
